Europäisches Patentamt

European Patent Office

Office européen des brevets

(19)

(11) Veröffentlichungsnummer : **0 205 816**
**B1**

(12) **EUROPÄISCHE PATENTSCHRIFT**

(45) Veröffentlichungstag der Patentschrift :
28.03.90

(21) Anmeldenummer : 86105615.8

(22) Anmeldetag : 23.04.86

(51) Int. Cl.$^5$ : **C 08 L 71/12**, C 08 L 25/00,
C 08 L 65/00, C 08 L 77/00,
C 08 K 5/09

(54) **Schlagzähe thermoplastische Formmassen auf Basis von modifizierten Polyphenylenethern, Polyoctenylenen und Polyamiden.**

(30) Priorität : 22.05.85 DE 3518278
20.12.85 DE 3545249

(43) Veröffentlichungstag der Anmeldung :
30.12.86 Patentblatt 86/52

(45) Bekanntmachung des Hinweises auf die Patenterteilung : 28.03.90 Patentblatt 90/13

(84) Benannte Vertragsstaaten :
AT BE CH DE FR GB IT LI NL SE

(56) Entgegenhaltungen :
EP-A- 0 024 120
DE-A- 3 138 401
DE-A- 3 518 277
US-A- 4 164 493

(73) Patentinhaber : HÜLS AKTIENGESELLSCHAFT
Patentabteilung / PB 15 - Postfach 13 20
D-4370 Marl 1 (DE)

(72) Erfinder : Dröscher, Michael, Dr.
Hetkerbruch 34
D-4270 Dorsten 11 (DE)
Erfinder : Bartmann, Martin, Dr.
Burgstrasse 35
D-4350 Recklinghausen (DE)
Erfinder : Burzin, Klaus, Dr.
Wellerfeldweg 164
D-4370 Marl (DE)
Erfinder : Feinauer, Roland, Dr.
Flämingstrasse 34
D-4370 Marl (DE)
Erfinder : Gerth, Christian, Dr.
Brukterer Strasse 8
D-4358 Haltern (DE)
Erfinder : Neugebauer, Wolfgang, Dr.
Holunderstrasse 9
D-4370 Marl (DE)
Erfinder : Jadamus, Hans, Dr.
Hervester Strasse 8
D-4370 Marl (DE)
Erfinder : Ribbing, Wilfried, Dr.
Heesternweg 20
D-4270 Dorsten 12 (DE)
Erfinder : Lohmar, Jörg, Dr.
Kirchhorder Strasse 237
D-4600 Dortmund (DE)

**Beschreibung**

Polyphenylenether (PPE) sind technische Hochleistungsthermoplaste mit hohen Schmelzviskositäten und Erweichungspunkten. Sie eignen sich für zahlreiche technische Anwendungen, bei denen es auf Beständigkeit bei hohen Temperaturen ankommt (vgl. US-PSS 33 06 874, 33 06 875, 32 57 357 und 32 57 358). Gewisse Eigenschaften der Polyphenylenether sind für technische Anwendungen unerwünscht. Beispielsweise sind Formteile aus Polyphenylenethern aufgrund schlechter Schlagzähigkeit spröde.

Nachteilig sind die hohen Schmelzviskositäten und Erweichungspunkte, die zu Schwierigkeiten bei der Verarbeitung führen. Es ist zu berücksichtigen, daß Polyphenylenether bei hohen Temperaturen zu Instabilität und Verfärbung neigen.

Polyphenylenether sind in vielen organischen Lösungsmitteln löslich oder quellen sehr stark. Dies hat zur Folge, daß sie für Anwendungen, bei denen sie in Kontakt mit solchen Lösemitteln kommen, nicht geeignet sind.

Es ist bekannt, daß die Eigenschaften von Polyphenylenetherharzen durch Abmischen mit anderen Polymeren verbessert werden können. So haben z. B. Abmischungen von Polyphenylenethern mit schlagzähen Polystyrolen eine größere technische Bedeutung erlangt (vgl. DE-PSS 21 19 301 und 22 11 005). Diese Abmischungen lassen sich gut zu Formteilen mit ausreichender Zähigkeit verarbeiten, weisen jedoch den Nachteil auf, daß mit zunehmendem Polystyrolgehalt die Wärmeformbeständigkeit abnimmt. Auch bei diesen Abmischungen ist die Lösemittelbeständigkeit unbefriedigend.

Abmischungen von Polyphenylenethern mit Polyamiden, weisen zwar eine gute Fließfähigkeit und auch eine gute Lösemittelbeständigkeit auf (DE-AS 16 94 290, JP-A 78 47 390). Es werden aber in der Regel spröde Produkte erhalten, da die beiden Komponenten unverträglich und deshalb schlecht ineinander dispergierbar sind. Aromatische Polyamide, wie sie beispielsweise gemäß EP-OS 0 131 445 eingesetzt werden, lassen sich zudem mit Polyphenylenethern schlecht verarbeiten. Eine bessere Verträglichkeit der beiden Phasen wird durch eine Funktionalisierung des Polyphenylenether, z. B. mit Maleinsäureanhydrid in Gegenwart von Radikalbildnern, erreicht (J 59 066 452). Die Verwendung von Radikalbildnern führt aber zu einer unerwünschten und unkontrollierten partiellen Vergelung der PPE-Phase.

Es ist daher vorgeschlagen worden, die Verträglichkeit beider Polymeren durch Zusatz einer ausreichenden Menge eines Fließmittels z. B. eines organischen Phosphats (vgl. EP-OS 0 129 825) oder eines Diamids (vgl. EP-OS 0 115 218) zu erhöhen. Solche Lösungen vermögen nicht zu überzeugen, da die verbesserte Verträglichkeit mit einer erheblich reduzierten Wärmeformbeständigkeit in Kauf genommen werden muß. Den gleichen Nachteil weisen Formmassen auf, denen Copolymere aus Styrol und ungesättigten Säurederivaten zugesetzt worden sind (vgl. EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuk-Polymeren bestehen. Als dritte Komponente wird ein flüssiges Dienpolymer, ein Epoxid oder eine Verbindung mit einer Doppel- oder einer Dreifachbindung und einer funktionellen Gruppe (wie z. B. Säure, Anhydrid, Ester, Amino- oder Alkoholgruppe) eingesetzt. Die Zähigkeit der erhaltenen Harzmassen reicht aber für viele Anwendungen nicht aus.

Ziel der vorliegenden Erfindung war es, lösungsmittelbeständige Formmassen auf Basis von Polyphenylenethern und leicht verarbeitbaren Polyamiden herzustellen, die sich durch

hohe Zähigkeit,

einen guten Phasenverbund (erkennbar an hohen Reißdehnungswerten),

eine hohe Lösemittelbeständigkeit und

eine hohe Wärmeformbeständigkeit auszeichnen sollten.

Es wurden jetzt Formmassen gefunden, die diesen Ansprüchen gerecht werden. Diese bestehen aus

a) 5 bis 85 Gewichtsteilen, vorzugsweise 20 bis 50 Gewichtsteilen, einer umgeschmolzenen Verformmasse folgender Zusammensetzung

60 bis 98 Gewichtsteile PPE

40 bis 2 Gewichtsteile Polyoctenylene

0,1 bis 5 Gewichtsteile Maleinsäureanhydrid (MSA)

0,1 bis 5 Gewichtsteile einer weiteren Säurekomponente mit einem Schmelzpunkt unter 100 °C

b) 95 bis 15 Gewichtsteilen, vorzugsweise 80 bis 50 Gewichtsteilen, eines aliphatischen Homopolyamids oder eines Copolyamids mit einem überwiegenden Anteil zugrundeliegender aliphatischer Monomereinheiten und

c) gegebenenfalls, Polystyrolharzen, einen Flammschutz sowie weiteren Zusatzstoffen,

wobei das lineare Mittel der Volumenverteilung $D = (\mathrm{Sigma}\ N_i D_i^4)/(\mathrm{Sigma}\ N_i D_i^3) < 2\ \mu m$ ist. Hierbei steht $D_i$ für den Durchmesser der Partikel und $N_i$ gibt die Zahl der Partikel mit dem Durchmesser $D_i$ an.

Es werden hierbei sehr gute Reißdehnungs- und Kerbschlagzähigkeitswerte erhalten, wenn die PPE-Phase entsprechend in der Polyamidmatrix dispergiert ist.

Gegenstand der Ansprüche 4 bis 9 sind weitere bevorzugte thermoplastische Massen.

Das Verfahren zur Herstellung dieser Massen zeichnet sich dadurch aus, daß man zuerst die feste Mischung aus dem Polyphenylenether und dem Polyoctenylen mit Maleinsäureanhydrid und der weiteren Säurekomponente behandelt, das Gemisch aufschmilzt und sodann das Polyamid und gegebenenfalls weitere Komponenten zusetzt.

Formmassen mit hohen Reißdehnungs- und Kerbschlagzähigkeitswerten lassen sich erhalten, wenn man maximal 50 Gewichtsteile der beschriebenen auf- oder umgeschmolzenen Vorformmasse verwendet. Eine weitere günstige Vorgehensweise wird in Anspruch 12 beschrieben.

Der Einsatz von Maleinsäureanhydrid-Schmelzen, die aufgrund ihrer Tränenreizung physiologisch nicht unbedenklich sind, kann nach diesem Verfahren vermieden werden.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Wichtig ist, daß die Vorformmasse vor ihrer Verwendung in den thermoplastischen Massen entweder auf- oder umgeschmolzen wurde.

Als Polyphenylenether kommen in erster Linie Polyether auf Basis von 2,6-Dimethylphenol infrage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole infrage, deren Alkylrest vorzugsweise höchstens 6 C-Atome besitzt, sofern sichergestellt ist, daß dieser kein Alfa-ständiges tertiäres C-Atom aufweist. Ferner eignen sich Phenole, die lediglich in einer ortho-Stellung durch einen tertiären Alkylrest, insbesondere einen tertiären Butylrest, substituiert sind. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 35 bis 80 cm³/g. Bevorzugt ist das Polymere des 2,6-Dimethylphenols, der Poly-(2,6-dimethyl-1,4-phenylen-ether) mit einer Grenzviskosität von 0,3 bis 0,65 cm³/g.

Die Polyphenylenether werden üblicherweise als Pulver oder Granulate eingesetzt.

Die Polyoctenylene werden durch ringöffnende bzw. ringerweiternde Polymerisation von Cyclooocten hergestellt (siehe z. B. A. Dräxler, Kautschuk + Gummi, Kunststoffe 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 cm³/g, vorzugsweise 80 bis 160 cm³/g, bestimmt an einer 0,1 %igen Lösung in Toluol. 55 bis 95 %, vorzugsweise 75 bis 85 %, seiner Doppelbindung liegen in der trans-Form vor.

Es gibt verschiedene Möglichkeiten, um eine Mischung aus dem Polyphenylenether und dem Polyoctenylen herzustellen. Eine Möglichkeit besteht darin, daß man beide Polymere in einem geeigneten Lösemittel löst und die Mischung durch Abdampfen des Lösemittels oder Ausfällen mit einem Nichtlöser isoliert. Eine andere Möglichkeit besteht darin, die beiden Polymeren in der Schmelze zu vereinigen. Bezüglich weiterer Einzelheiten wird auf die deutsche Patentanmeldung P 34 36 780.2 « Thermoplastische Massen auf Basis von Polyphenylethern und Polyoctenylenen sowie Verfahren zu ihrer Herstellung » verwiesen.

Die so erhaltene Polymermischung wird mit einem Gemisch aus Maleinsäureanhydrid und einer weiteren Säurekomponente behandelt, indem man eine flüssige Mischung aus MSA und der weiteren Säurekomponente bei Temperaturen unter 100 °C, vorzugsweise unter 50 °C, in die feste Polymermischung eindiffundieren läßt, wobei dafür zu sorgen ist, daß es nicht zu Verklebungen kommt. Dies erreicht man entweder durch portionsweise Zugabe oder durch großflächige Auftragung. Anschließend wird die Mischung bei 270 bis 350 °C, vorzugsweise 280 bis 320 °C, umgeschmolzen.

Entscheidend ist, daß die weitere Säurekomponente einem Schmelzpunkt unter 100 °C aufweist.

Als weitere Säurekomponente eignen sich
ungesättigte Mono- und Dicarbonsäuren mit bis zu 14 C-Atomen,
deren Anhydride mit Ausnahme von Maleinsäureanhydrid,
die Ester der soeben aufgeführten Säuren mit gegebenenfalls ungesättigten Alkoholen, die maximal 6 C-Atome aufweisen.

Bevorzugt werden die Ester der Acryl- und Fumarsäure, insbesondere mit n-Butanol. Bezogen auf 100 Gewichtsteile der Summe aus Polyphenylenethern und Polyoctenylenen setzt man eine Mischung aus je 0,1 bis 5 Gewichtsteilen Maleinsäureanhydrid und der weiteren Säurekomponente ein.

Als Polyamide kommen Homo- und Copolymere infrage, die vorzugsweise ausschließlich aliphatischer Struktur sind. Insbesondere seien hier die 6-, 66-, 612-, 11- und 12-Polyamide aufgeführt. Geeignet sind aber auch gemischte aliphatisch-aromatische Copolyamide, sofern der Anteil der zugrundeliegenden aliphatischen Bausteine überwiegt (vgl. US-PSS 2 071 250, 2 071 251, 2 130 523, 2 130 948, 2 241 322, 2 312 966, 2 512 606, 3 393 210 ; Kirk-Othmer, Encyclopedia of chemical technology, Vol. 18, John-Wiley & Sons (1982), Seiten 328 bis 435. Das Zahlenmittel des Molekulargewichtes der Polyamide liegt über 5.000, vorzugsweise über 10.000.

Die Vereinigung der Polyamide mit der Vorformmasse erfolgt durch Mischen der beiden Schmelzen in einem gut knetenden Aggregat bei 250 bis 350 °C, vorzugsweise bei 270 bis 310 °C. Es ist vorteilhaft, die beiden Komponenten trocken vorzumischen und zu extrudieren oder das Polyamid in die Schmelze der PPE-Vorformmasse zu dosieren.

Bezogen auf 5 bis 85 Gewichtsteile der Vorformmasse werden 95 bis 15 Gewichtsteile Polyamid eingesetzt. Vorzugsweise sind es 80 bis 50 Gewichtsteile Polyamid bei 20 bis 50 Gewichtsteilen der Vorformmasse.

Die Formmassen können zusätzlich noch unmodifizierte oder schlagzähmodifizierte Polystyrolharze enthalten. Zur Erzielung der angestrebten hohen Wärmeformbeständigkeit werden in der Regel Formmassen mit einem geringen Gehalt dieser Harze eingesetzt.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel « Flammenfestmach von Kunststoff », Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit und Lösemittelbeständigkeit aus.

Die Viskositätszahl (J) des Polyphenylenethers wurde nach DIN 53 728 bei 25 °C in Chloroform (Konzentration : 0,5 g Polymer in 100 cm$^3$ Lösung) in cm$^3$/g gemessen.

Die Kerbschlagzähigkeit ($a_K$) der Formmassen wurde nach DIN 53 433 an bei 290 °C gespritzten Normkleinstäben mit Rechtekkerbe bei Raumtemperatur gemessen.

Die Reißdehnung (Epsilon $_R$) wurde nach DIN 53 455 an bei 290 °C gespritzten Schulterstäben bestimmt.

Die Vicat-Erweichungstemperatur nach DIN 53 699 wurde an bei 290 °C gespritzten Formkörpern von 4 mm Dicke bestimmt.

Zur Bestimmung der PPE-Partikelgröße wird die Formmasse in Hexafluorisopropanol (HFIP) gelöst, wobei die PPE-Komponente aufschwimmt. Das Flotat wird mehrmals mit HFIP gewaschen, getrocknet und im Rasterelektronenmikroskop untersucht. Die Partikeldurchmesser werden durch Ausmessen von mindestens 1 000 Teilchen anhand der photographischen Aufnahmen bestimmt.

Beispiele

Herstellung und Herkunft der Komponenten
1. Polyphenylenether

Die Polyphenylenether erhält man durch oxidative Kupplung von 2,6-Dimethylphenol, Abstoppung der Reaktion bei dem gewünschten J-Wert und anschließende Reaktionsextraktion gemäß DE-OSS 33 13 864 und 33 32 377.

Beispiel 1.1

Entsprechend wird ein Polyphenylenether mit einem J-Wert von 55 cm$^3$/g hergestellt. Das Lösemittel wird durch Abdampfen entfernt und die Schmelze über einen Entgasungsextruder extrudiert, anschließend granuliert und getrocknet.

### Beispiel 1.2

Entsprechend wird ein Polyphenylenether mit einem J-Wert von 55 cm³/g als 10 %ige Toluollösung hergestellt.

2. Polyoctenylene

Es wird ein Polyoctenylen mit einem J-Wert von 120 cm³/g und einem trans-Gehalt von 80 % eingesetzt. Ein solches Produkt ist unter dem Namen VESTENAMER[R] 8012 im Handel erhältlich (Hersteller: HÜLS AKTIENGESELLSCHAFT, D-4370 Marl 1). Weitere Kenndaten dieses Produkte sind der Zeitschrift « Kautschuk, Gummi, Kunststoffe » 1981, Seiten 185 bis 190, sowie dem hüls-Merkblatt Nr. 2247 « VESTENAMER[R] 8012 » zu entnehmen. Das Polyoctenylen kann beispielsweise auch nach K. J. Ivin « Olefin Metathesis », Academic Press, Seiten 236 ff., 1983, und den dort angegebenen weiteren Literaturstellen hergestellt werden.

3. Mischung aus Polyphenylenethern und Polyoctenylen

In einer Lösung gemäß Beispiel 1.2 wird das Polyoctenylen gemäß Beispiel 2 aufgelöst, wobei auf 90 Massenteile Polyphenylenether 10 Masseteile Polyoctenylen kommen. Die Lösung wird auf 70 % aufkonzentriert. Das noch verbliebene Lösemittel wird mittels eines Entgasungsextruders entfernt. Es wird granuliert und getrocknet.

4. Herstellung der Vorformmasse

Zu 2 kg der Mischung gemäß 3 wird in einem Labormischer bei Raumtemperatur portionsweise eine flüssige Mischung (Temperatur 50 °C) der in Tabelle 1 angegebenen Säurederivate gegeben ohne daß das Granulat dabei verklebt.

Das so behandelte Granulat wird in einem Zweischneckenkneter bei 290 °C Schmelztemperatur umgeschmolzen, stranggranuliert und getrocknet.

### Tabelle 1

### Herstellung der Vorformmasse

|  | Versuch 4.1 | Versuch 4.2 |
|---|---|---|
| Menge der PPE-Polyoctenylen-Mischung in g | 2000 | 2000 |
| Menge an MSA in g | 20 | 20 |
| weitere Säurekomponente | n-Butyl-acrylat | Fumarsäure-di-n-butylester |
| Menge der weiteren Säurekomponente | 20 g | 20 g |

### Vergleichversuch A

Eine flüssige Mischung von 20 g Maleinsäureanhydrid und 20 g n-Butylacrylat (Temperatur 50 °C) wird portionsweise zu 2 kg der Mischung gemäß 3 zugesetzt und anschließend direkt, d. h. ohne vorheriges Umschmelzen, mit Polyamid gemischt.

### Vergleichsversuch B

20 g Maleinsäureanhydrid werden in einem Zweischneckenkneter zu 2 kg PPE gemäß Beispiel 1.1 bei einer Schmelztemperatur von 290 °C zugemischt. Anschließend wird granuliert und getrocknet.

### Vergleichsversuch C

Analog zu Beispiel B werden 20 g Maleinsäureanhydrid und 10 g Dicumylperoxid zu 2 kg PPE zugemischt.

5. Formmassen

Die gemäß 4.1, 4.2, A, B und C hergestellten Vorformmassen werden nach den Angabe in Tabelle 2 mit Polyamiden gemischt und in einem Zweischneckenextruder, dessen Dispergierwirkung durch Knetblöcke verstärkt ist, bei 290 °C umgeschmolzen, stranggranuliert und getrocknet. Das Produkt wird zu Normkörpern verspritzt und geprüft.

Als Polyamid 6 wird ULTRAMID[R] B 4, ein Produkt der BASF AG, D-6700 Ludwigshafen, eingesetzt.

Als Polyamid 66 wird ULTRAMID[R] A 4, ein Produkt der BASF AG, D-6700 Ludwigshafen, eingesetzt.

Als Polyamid 12 wird VESTAMID[R] L 1901, ein Produkt der HÜLS AKTIENGESELLSCHAFT, D-4370 Marl, eingesetzt.

Tabelle 2 läßt erkennen, daß die Reißdehnungs- und Kerbschlagzähigkeitswerte erheblich zurückgehen,

wenn man die Vorformmasse nicht umschmilzt (siehe Vergleichsversuch A)

wenn man anstelle einer Mischung aus PPE und Polyoctenylenen nur PPE und anstelle einer Mischung aus MSA und einer weiteren Säurekomponente nur MSA einsetzt oder

wenn man anstelle einer Mischung aus PPE und Polyoctenylenen nur PPE und anstelle von MSA und einer weiteren Säurekomponente MSA und ein organisches Peroxid einsetzt.

(Siehe Tabelle 2 Seite 7 f.)

6

EP 0 205 816 B1

Tabelle 2

Zusammensetzung und Eigenschaften der Formmassen

| Versuch | Zusammensetzung | | (Gew.-%) | Polyamid[a] | $a_{K_2}$ (kj/m²) | Epsilon$_R$ (%) | Vicattemp. (°C) B/50 | lineares Mittel der Volumenverteilung der PPE-teilchen in der Polyamid-Matrix (μm) |
|---|---|---|---|---|---|---|---|---|
| | (Gew.-%) | Vorformmasse gemäß Versuch | | | | | | |
| 5.1 | 40 | 4.1 | 60 | PA 12 | 25 | 58 | 156 | 0,7 |
| 5,2 | 40 | 4.2 | 60 | PA 12 | 20 | 48 | 156 | 0,9 |
| 5.3 | 40 | 4.1 | 60 | PA 6 | 20 | 43 | 195 | 1,2 |
| 5.4 | 40 | 4.1 | 60 | PA 66 | 12 | 56 | 212 | 1,3 |
| D | 40 | A | 60 | PA 12 | 3 | 3 | 159 | 9,7 |
| E | 40 | B | 60 | PA 6 | 4 | 15 | 195 | 6,3 |
| F | 40 | C | 60 | PA 6 | 4 | 8 | 194 | 7,5 |

a) PA 12 = VESTAMID[R] L 1901 (HÜLS AG)
PA 6 = ULTRAMID[R] B4 (BASF AG)
PA 66 = ULTRAMID[R] A4 (BASF AG)

**Patentansprüche**

1. Thermoplastische Massen auf Basis von Polyphenylenethern, Polyamiden, ungesättigten Säurederivaten und gegebenenfalls weiteren Zusatzstoffen, dadurch gekennzeichnet, daß sie folgende Bestandteile enthalten :

a) 5 bis 85 Gewichtsteile einer auf- oder umgeschmolzenen Vorformmasse aus

60 bis 98 Gewichtsteilen Polyphenylenether,

40 bis 2 Gewichtsteilen Polyoctenylenen,

0,1 bis 5 Gewichtsteilen Maleinsäureanhydrid und

0,1 bis 5 Gewichtsteilen einer weiteren Säurekomponente mit einen Schmelzpunkt unter 100 °C, die

eine ungesättigte Mono- oder Dicarbonsäure mit bis zu 14 C-Atomen,

deren Anhydrid mit Ausnahme von Maleinsäureanhydrid oder

deren Ester mit einem gegebenenfalls ungesättigten Alkohol mit bis zu 6 C-Atomen sein kann

b) 95 bis 15 Gewichtsteilen eines aliphatischen Homopolyamids oder eines Copolyamids mit einem überwiegenden Anteil zugrundeliegender aliphatischer Monomereinheiten, wobei die in der Polyamidmatrix dispergierten Polyphenylenether-Teilchen ein lineares Mittel der Volumenverteilung unter 2 $\mu$m aufweisen ; und

c) gegebenenfalls Polystyrolharze, ein Flammschutzmittel sowie weitere Zusatzstoffe.

2. Thermoplastische Massen nach Anspruch 1, dadurch gekennzeichnet, daß sie

a) 20 bis 50 Gewichtsteile der näher gekennzeichneten Vorformmasse und

b) 80 bis 30 Gewichtsteile der näher gekennzeichneten Polyamide enthalten.

3. Thermoplastische Massen nach den Ansprüchen 1 und 2, dadurch gekennzeichnet, daß als Polyamide 6-, 46-, 66-, 612-, 11- oder 12-Polyamide eingesetzt werden.

4. Thermoplastische Massen nach den Ansprüchen 1 bis 3, dadurch gekennzeichnet, daß das Zahlenmittel des Molekulargewichtes der Polyamide über 5.000, vorzugsweise über 10.000, liegt.

5. Thermoplastische Massen nach den Ansprüchen 1 bis 4, dadurch gekennzeichnet, daß als Polyphenylenether ein Polymeres des 2,6-Dimethylphenols mit einer Grenzviskosität von 0,3 bis 0,65 cm$^3$/g eingesetzt wird.

6. Thermoplastische Massen gemäß den Ansprüchen 1 bis 5, dadurch gekennzeichnet, daß das Polyoctenylen eine Viskositätszahl von 50 bis 350 cm$^3$/g, vorzugsweise 80 bis 160 cm$^3$/g, bestimmt an einer 0,1 %igen Lösung in Toluol, aufweist.

7. Thermoplastische Massen gemäß den Ansprüchen 1 bis 6, dadurch gekennzeichnet, daß 55 bis 95, vorzugsweise 75 bis 85 % der Doppelbindungen des Polyoctenylens trans-konfiguriert sind.

8. Thermoplastische Massen nach den Ansprüchen 1 bis 7, dadurch gekennzeichnet, daß das ungesättigte Säurederivat der Ester der Acrylsäure mit einem C$_{1-6}$-Alkohol, insbesondere n-Butylacrylat, ist.

9. Thermoplastische Massen nach den Ansprüchen 1 bis 8, dadurch gekennzeichnet, daß das ungesättigte Säurederivat der Ester der Fumarsäure mit einem C$_{1-6}$-Alkohol, insbesondere Fumarsäure-di-n-butylester, ist.

10. Verfahren zur Herstellung der thermoplastischen Massen nach den Ansprüchen 1 bis 9, dadurch gekennzeichnet, daß man zuerst die feste Mischung aus dem Polyphenylenether und dem Polyoctenylen mit Maleinsäureanhydrid und der weiteren Säurekomponente behandelt, das Gemisch aufschmilzt und sodann das Polyamid zusetzt und gegebenenfalls Polystyrolharze, Flammschutzmittel sowie weitere Zusatzstoffe zusetzt.

11. Verfahren nach Anspruch 10, dadurch gekennzeichnet, daß man eine flüssige Mischung aus Maleinsäureanhydrid und der weiteren Säurekomponente bei Temperaturen unter 100 °C, vorzugsweise unter 50 °C, in die feste Mischung aus dem Polyphenylenether und dem Polyoctenylen eindiffundieren läßt.

**Claims**

1. Thermoplastic compositions based on polyphenylene ethers, polyamides, unsaturated acid derivatives and, if desired, other additives, characterized in that it contains the following components :

a) 5 to 85 parts by weight of a melted or remelted preliminary moulding composition made from 60 to 98 parts by weight of polyphenylene ether,

40 to 2 parts by weight of polyoctenylenes,

0.1 to 5 parts by weight of maleic anhydride and

0.1 to 5 parts by weight of another acid component having a melting point below 100 °C, which may be an unsaturated monocarboxylic acid or dicarboxylic acid having up to 14 C atoms,

the anhydride thereof with the exception of maleic anhydride or

the ester thereof with a saturated or unsaturated alcohol having up to 6 C-atoms

b) 95 to 15 parts by weight of an aliphatic homopolyamide or of a copolyamide based on a predominant proportion of aliphatic monomer units, in which the polyphenylene ether particles dispersed in the polyamide matrix have a linear volume mean of the diameters distribution of below 2 μm ; and

c) if desired, polystyrene resins, a flame retardant and other additives.

2. Thermoplastic compositions according to claim 1, characterized in that it contains

a) 20 to 50 parts by weight of the more precisely characterized preliminary moulding composition and

b) 80 to 30 parts by weight of the more precisely characterized polyamides.

3. Thermoplastic compositions according to claims 1 and 2, characterized in that polyamide-6, polyamide-46, polyamide-66, polyamide-612, polyamide-11 or polyamide-12 are used as polyamides.

4. Thermoplastic compositions according to any of claims 1 to 3, characterized in that the number-average molecular weight of the polyamides is above 5,000, preferably above 10,000.

5. Thermoplastic compositions according to any of claims 1 to 4, characterized in that a polymer of 2,6-dimethylphenol having an intrinsic viscosity of 0.3 to 0.65 $cm^3/g$ is used as polyphenylene ether.

6. Thermoplastic compositions according to any of claims 1 to 5, characterized in that the polyoctenylene has a viscosity number, determined on a 0.1 % strength solution in toluene, of 50 to 350 $cm^3/g$, preferably 80 to 160 $cm^3/g$.

7. Thermoplastic compositions according to any of claims 1 to 6, characterized in that 55 to 95, preferably 75 to 85 % of the double bonds of the polyoctenylene are in the trans-configuration.

8. Thermoplastic compositions according to any of claims 1 to 7, characterized in that the unsaturated acid derivative is the ester of acrylic acid with a $C_{1-6}$-alcohol, and in particular is n-butyl acrylate.

9. Thermoplastic compositions according to any of claims 1 to 8, characterized in that the unsaturated acid derivative is the ester of fumaric acid with a $C_{1-6}$-alcohol, and in particular is di-n-butyl fumarate.

10. Process for the preparation of thermoplastic compositions according to any of claims 1 to 9, characterized in that the solid mixture made from the polyphenylene ether and the polyoctenylene is initially treated with maleic anhydride and the other acid component, the mixture is melted and then the polyamide is added and, if desired, polystyrene resins, flame retardants and other additives are added.

11. Process according to claim 10, characterized in that a liquid mixture of maleic anhydride and the other acid component is allowed to diffuse into the solid mixture of the polyphenylene ether and the polyoctenylene, at temperatures below 100 °C, preferably below 50 °C.

**Revendications**

1. Masses thermoplastiques à base d'éthers polyphényléniques, de polyamides, de dérivés d'acides non-saturés et le cas échéant d'autres additifs, caractérisées par le fait qu'elles renferment les constituants suivants :

a) de 5 à 85 parties en poids d'une masse de prémoulage fondue ou refondue à base

de 60 à 98 parties en poids d'éther polyphénylénique,

de 40 à 2 parties en poids de poly-octénylènes,

de 0,1 à 5 parties en poids d'anhydride d'acide maléique et

de 0,1 à 5 parties en poids d'un autre composant acide présentant un point de fusion inférieur à 100 °C qui, peut être

un acide mono-carboxylique ou di-carboxylique insaturé comportant jusqu'à 14 atomes de carbone,

son anhydride, à l'exception de l'anhydride de l'acide maléique, ou

ses esters avec un alcool éventuellement insaturé comportant jusqu'à 6 atomes de carbone,

b) de 95 à 15 parties en poids d'une homo-polyamide aliphatique ou d'une copolyamide présentant une fraction prépondérante d'unités monomères aliphatiques de base, tandis que les particules d'éther polyphénylénique dispersées dans la matrice de polyamide présentent une moyenne linéaire de la répartition volumique inférieure à 2 μm ; et

c) éventuellement des résines de polystyrène, un agent ignifugeant, ainsi que d'autres additifs.

2. Masses thermoplastiques selon la revendication 1, caractérisées par le fait qu'elles renferment

a) de 20 à 50 parties en poids de la masse de prémoulage caractérisée plus en détail ci-dessus, et

b) de 80 à 30 parties en poids des polyamides caractérisées plus en détail ci-dessus.

3. Masses thermoplastiques selon les revendications 1 et 2, caractérisées par le fait que l'on utilise, comme polyamides, les polyamides « 6 », « 46 », « 66 », « 612 », « 11 » ou « 12 ».

4. Masses thermoplastiques selon les revendications 1 à 3, caractérisées par le fait que la moyenne numérique du poids moléculaire des polyamides est supérieure à 5 000, de préférence supérieure à 10 000.

5. Masses thermoplastiques selon les revendications 1 à 4, caractérisées par le fait que l'on utilise, comme éther polyphénylénique, un polymère du 2,6-diméthyl-phénol présentant une viscosité limite de 0,3 à 0,65 cm³ par gramme.

6. Masses thermoplastiques selon les revendications 1 à 5, caractérisées par le fait que le poly-octénylène présente un indice de viscosité de 50 à 350 cm³ par gramme, de préférence de 80 à 160 cm³ par gramme, déterminé sur une solution à 0,1 % dans le toluène.

7. Masses thermoplastiques selon les revendications 1 à 6, caractérisées par le fait que de 55 à 95, de préférence de 75 à 85 % des doubles liaisons du poly-octénylène ont la configuration trans.

8. Masses thermoplastiques selon les revendications 1 à 7, caractérisées par le fait que le dérivé d'acide insaturé est l'ester de l'acide acrylique avec un alcool en $C_1$ à $C_6$, en particulier l'acrylate de n-butyle.

9. Masses thermoplastiques selon les revendications 1 à 8, caractérisées par le fait que le dérivé d'acide insaturé est l'ester de l'acide fumarique avec un alcool en $C_1$ à $C_6$, en particulier le fumarate de di-n-butyle.

10. Procédé de préparation des masses thermoplastiques selon les revendications 1 à 9, caractérisé par le fait que l'on traite d'abord le mélange solide constitué par l'éther polyphénylénique et par le poly-octénylène avec l'anhydride d'acide maléique et les autres composants acides, que l'on fait fondre le mélange et que l'on ajoute ensuite la polyamide et éventuellement des résines de polystyrène, des agents ignifugeants, ainsi que d'autres additifs.

11. Procédé selon la revendication 10, caractérisé par le fait que l'on fait se diffuser, dans le mélange solide constitué par l'éther polyphénylénique et par le poly-octénylène, à des températures inférieures à 100 °C, de préférence inférieures à 50 °C, un mélange liquide constitué par l'anhydride d'acide maléique et par l'autre composant acide.